# EUROPÄISCHE PATENTANMELDUNG

(11) **EP 2 037 249 A2**
(43) Veröffentlichungstag der Anmeldung: **18.03.2009**
(21) Anmeldenummer: 08015406.5
(22) Anmeldetag: 01.09.2008
(51) Int. Cl.: G01L 5/10

(54) **Vorrichtung zum Messen mechanischer Größen, Verfahren zum Messen mechanischer Größen sowie Verwendung einer Vorrichtung zum Messen mechanischer Größen**

(30) Priorität: 17.09.2007 DE 102007044225
(71) Anmelder: Liebherr-Werk Nenzing GmbH, 6710 Nenzing (AT)
(72) Erfinder: Scheidl, Andreas, Dipl., Ing., 6773 Vandans (AT); Schmid, Josef, Mag.(FH), Ing., 6845 Hohenems (AT); Burkhardt, Axel, Dipl., Ing., 6820 Gurtis (AT); Schneider, Klaus, Dr. , Dipl., Ing., 88145 Hergatz (DE)
(74) Vertreter: Laufhütte, Dieter

(57) **Zusammenfassung**

Die vorliegende Erfindung betrifft eine Vorrichtung zum Messen mechanischer Größen, insbesondere zur Erfassung von Zugkräften, Schubkräften und Biegeverformungen, sowie ein Verfahren zum Messen mechanischer Größen und die Verwendung einer Vorrichtung zum Messen mechanischer Größen.

## Beschreibung

Die vorliegende Erfindung betrifft eine Vorrichtung zum Messen mechanischer Größen mit den Merkmalen des Oberbegriffs des Patentanspruchs 1 sowie ein Verfahren zum Messen mechanischer Größen und die Verwendung einer Vorrichtung zum Messen mechanischer Größen.

Aus dem Stand der Technik ist es bekannt, gesonderte Vorrichtungen zum Messen mechanischer Größen, fachüblich auch Kraftmesslaschen genannt, insbesondere für die Messung von Zugkräften zu verwenden. Dabei wird ein im wesentlichen rechteckiges Flacheisen mit drei Ausnehmungen bzw. Bohrungen versehen, die ihren Mittelpunkt auf der Längsachse der Vorrichtung haben, wobei die Längsachse zugleich eine Symmetrieachse in Bezug auf die Anordnung der Bohrungen der Vorrichtungen ist.

Derartige Vorrichtungen kommen beispielsweise für Messungen von Zugkräften in einem Bereich von 0 bis 400 kN zum Einsatz. Dabei werden die beiden außen liegenden Bohrungen mit Bolzen versehen, über die Zugkräfte in die Kraftmesslasche eingeleitet werden. Die Bolzen werden dabei von der Bohrung vollständig umfasst. In der dritten Bohrung befinden sich Dehnmessstreifen. Mittels der Dehnmessstreifen wird eine Kraftmessung in Längsrichtung ermöglicht, wobei im wesentlichen die Längsdehnung der Vorrichtung erfaßt wird. Aufgrund der Kompaktheit und Feinheit der Dehnmessstreifen ist eine derartige Kraftmesslasche besonders anfällig. Darüber hinaus besteht ein hohes Prozessrisiko in der Fertigung, aufgrund der geforderten Tolleranzen und Passungen. Zusätzlich ist als nachteilig bekannt, dass aufgrund der geringen Längenänderung dieser Anordnung nur sehr feine Messsignale abgegriffen werden können. Aufgrund des Temperatureinflusses und der Biegeeinflüsse sind darüber hinaus mehrere Messstellen in der Lasche erforderlich, um Störfaktoren auszugleichen.

Es ist daher Aufgabe der vorliegenden Erfindung, eine Vorrichtung bereitzustellen, mittels derer mechanische Größen mit geringerem Aufwand und gleichzeitig wesentlich genauer gemessen werden können.

Erfindungsgemäß wird diese Aufgabe durch eine Vorrichtung zum Messen mechanischer Größen mit den Merkmalen des Patentanspruchs 1 gelöst. Danach ist vorgesehen, dass die Vorrichtung zum Messen mechanischer Größen erste Aufnehmungen zur Aufnahme von ersten Mitteln aufweist, wobei mittels der wenigstens zwei ersten Mittel Kraft in die Vorrichtung einleitbar ist. Es ist wenigstens ein zweites Mittel vorgesehen, über welches mechanische Größen erfassbar sind, und wenigstens einer zweiten Ausnehmung. Die ersten Ausnehmungen umschließen die ersten Mittel nicht vollständig und wenigstens zwei sich gegenüberliegende erste Ausnehmungen stehen mit einer zweiten Ausnehmung in Verbindung. Die ersten Ausnehmungen und die zweiten Ausnehmungen bilden dabei eine gemeinsame Ausnehmung. Die Ausnehmungen bilden dabei eine durchgängige Öffnung, d.h. sie durchdringen das Material der Vorrichtung vollständig.

Durch die gemeinsame Ausnehmung ergibt sich der Vorteil, dass die Längsdehnung der Vorrichtung auf eine Biegedehnung übersetzt wird. Diese kann in Querrichtung der Längenänderung der Vorrichtung gemessen werden, aus welcher sich die vorhandene Zugkraft ergibt. Die Übersetzung der Längsdehnung auf eine Biegedehnung wird dadurch ermöglicht, dass die ersten Ausnehmungen die ersten Mittel nicht vollständig umschließen und somit die Einfassung der zweiten Ausnehmung eine nahezu ungehinderte Durchbiegung in Folge der Längenänderung der Vorrichtung erfährt. Da die Längenänderung in Querrichtung größer als die Längenänderung in Längsrichtung ist, kann daher leichter und genauer gemessen werden. Eine weitere Folge ist, dass als zweite Mittel nicht zwingend Dehnungsmessstreifen eingesetzt werden müssen, sondern auch andere Meßsysteme wie optische Verfahren zum Einsatz kommen können. Ein weiterer Vorteil besteht darin, dass mehrere Messverfahren gleichzeitig eingesetzt werden können, so dass die Messdatenerfassung redundant erfolgt. Dies kann bei sicherheitskritischen Anwendungen von Vorteil sein.

Es kann vorgesehen sein, dass die ersten Ausnehmungen im wesentlichen kreisförmig sind. Dadurch wird es möglich, erste Mittel mit kreisförmigem Querschnitt in Zusammenhang mit der Vorrichtung zu verwenden. Die ersten Ausnehmungen können in diesem Fall beispielsweise durch eine durchgängige Bohrung gebildet sein, die zur zweiten Ausnehmung hin einen Spalt aufweist, der die erste Ausnehmung mit der zweiten Ausnehmung verbindet. Dadurch ergibt sich der Vorteil, dass beispielsweise bei Beaufschlagung mit einer Zugkraft durch erste Mittel die Zugkraft nicht bereits anteilig durch die Umfassung der ersten Ausnehmung aufgenommen wird, sondern nahezu verlustfrei in die Umfassung der zweiten Ausnehmung eingeleitet wird.

Von Vorteil ist es, wenn die durch die ersten und zweiten Ausnehmungen gebildete gemeinsame Ausnehmung im wesentlichen abgerundete Konturen aufweist. Dadurch können Spannungsspitzen vermieden und ein gleichmäßiger Kraftfluss in der Vorrichtung erreicht werden. Die einzigen Ecken der Kontur ergeben sich lediglich am Spalt, der die erste mit der zweiten Ausnehmung verbindet. Die übrigen Konturen sind ausnahmslos abgerundet, so dass sich im wesentlichen abgerundete Konturen der durch die ersten und zweiten Ausnehmungen gebildeten gemeinsamen Ausnehmung ergeben.

Die zweiten Mittel können angrenzend an die zweite Ausnehmung angebracht und/oder auf diese ausgerichtet sein. An der Umfassung der zweiten Ausnehmung kann beispielsweise besonders einfach die Biegedehnung in Folge von Krafteinleitung gemessen werden, so dass mechanische Größen wie z. B. Längenänderung, Dehnung oder Kräfte einfach bestimmt werden können.

Es können wenigstens zwei zweite Mittel vorgesehen sein, die an verschiedenen Ebenen oder verschiedenen Seitenflächen der Vorrichtung angebracht sind. Dadurch lässt sich eine höhere Messgenauigkeit erreichen.

Die ersten Mittel können als Bolzen ausgeführt sein. Dadurch wird es möglich, die erfindungsgemäße Vorrichtung z. B. in Verbindung mit bereits vorhandenen Messvorrichtungen, die Bolzen aufweisen, zu verwenden.

Es kann vorgesehen sein, dass die zweiten Mittel ein optisches, elektromagnetisches oder elektrostatisches Meßsystem umfassen. Derartige Messverfahren arbeiten sehr zuverlässig und erlauben eine kostengünstige, schnelle und sichere Erfassung von mechanischen Größen. Durch diese Messverfahren wird es zudem möglich, die Kräfteverteilung oder Spannungsverteilung in ihrer Gesamtheit zu erfassen und nicht wie bisher nur an den entsprechenden Messpunkten. Dadurch lassen sich genauere Auswertungen vornehmen.

Darüber hinaus kann es vorgesehen sein, dass die zweiten Mittel Dehnungsmessstreifen umfassen. Es ist denkbar, die Dehnungsmessstreifen an der Umfassung der zweiten Ausnehmung der Vorrichtung anzubringen, wo auch die größte Biegedehnung auftritt. Dehnungsmessstreifen weisen den Vorteil auf, dass sie leicht auswertbare elektrische Signale liefern.

Es kann vorgesehen sein, dass die Vorrichtung eine elliptische oder im wesentlichen kreisförmige Grundform aufweist. Durch eine derartige Form wird es möglich, Biegeverformungen für die Messung auszunutzen. Gleichzeitig erlaubt eine derartige Form, über die Vorrichtung große Kräfte zu übertragen. Elliptische Grundformen mit der längeren Achse in Kraftrichtung erlauben es, die größeren auftretenden Verformungen unter Last in Querrichtung auszuweisen. Dadurch wird es möglich, die Verformungen in Querrichtung zu messen. Wesentlicher Vorteil einer derartigen Grundform ist, dass der Kraftfluss möglichst ungestört bleibt.

In vorteilhafter Ausgestaltung der Erfindung kann die Grundform wenigstens zwei Symmetrieachsen aufweisen, wobei die erste Symmetrieachse durch die Mittelpunkte der ersten Ausnehmungen verläuft und die zweite Symmetrieachse wenigstens zwei sich gegenüberliegende erste Ausnehmungen aufeinander abbildet. Dadurch wird eine gleichmäßige Kraft- bzw. abgekürzte Lastverteilung in der Vorrichtung ermöglicht.

Eine Symmetriehälfte mit einer ersten Ausnehmung und dem Teil einer zweiten Ausnehmung kann der Form eines Torsos mit Kopf angenähert sein. Dabei bildet die erste Ausnehmung den Kopf, der die erste Ausnehmung mit der zweiten Ausnehmung verbindende Spalt den Hals und der Teil der zweiten Ausnehmung den Torso. Eine derartige Kontur erlaubt einen optimalen Kraftfluss und eine gleichmäßige Spannungsverteilung in der Vorrichtung. Insbesondere wird dadurch verhindert, dass Spannungsspitzen auftreten. Darüber hinaus werden Störeinflüsse aufgrund der Form verringert.

In vorteilhafter Ausgestaltung können zwei sich gegenüberliegende erste Ausnehmungen und eine zweite Ausnehmung vorgesehen sein. Die beiden ersten Ausnehmungen können dabei auf der Symmetrieachse liegen, wobei die Symmetrieachse deckungsgleich mit der Kraftrichtung ist.

Es ist denkbar, dass zwei sich gegenüberliegende Stege in der zweiten Ausnehmung vorgesehen sind. Dadurch ergibt sich der Vorteil, dass an den Stegen beispielsweise Dehnungsmessstreifen angebracht werden können. Ferner ist es denkbar, den Abstand der Stege zueinander zu erfassen, und dadurch die Biegeverformungen der Vorrichtung zu messen.

Die Stege können umgekehrt T-förmig ausgebildet sein. Dabei ragen die T-Enden der Stege in die zweite Ausnehmung hinein. Die sich gegenüberliegenden T-Enden bilden somit einen Spalt in der zweiten Ausnehmung.

In vorteilhafter Ausgestaltung können die Stege auf einer Symmetrieachse der Vorrichtung liegen. Die symmetrische Ausgestaltung ermöglicht einen optimalen Kraftfluss und eine gleichmäßige Spannungsverteilung.

Es ist denkbar, dass dritte Mittel zur zeitlichen Erfassung der mechanischen Größen vorgesehen sind. Dadurch ergibt sich der Vorteil, dass mit Hilfe der Vorrichtung Langzeitbelastungstests durchführbar sind.

Mittels der Vorrichtung können Zugkräfte, Schubkräfte oder Dehnung in wenigstens einer Raumrichtung erfassbar sein.

Ferner betrifft die Erfindung ein Verfahren zur Messung von mechanischen Größen, wobei mittels einer Vorrichtung nach Anspruch 1 bis 17 über die zweiten Mittel wenigstens eine mechanische Größe ermittelt wird. Ein derartiges Verfahren weist die Vorteile auf, dass mechanische Größen wie z. B. Zugkräfte mit geringerem Einfluss von Störgrößen, insgesamt genauer, einfacher und mit günstigeren Meßsystemen erfaßt werden können. Darüber hinaus wird es möglich, durch den Einsatz unterschiedlicher Erfassungssysteme die zu erfassende mechanische Größe redundant zu erfassen.

Es kann vorgesehen sein, durch das Verfahren mittels der Vorrichtung Zugkräfte, Schubkräfte oder Dehnung in wenigstens einer Raumrichtung zu erfassen.

Ferner ist es denkbar, dass im Rahmen des Verfahrens mittels der dritten Mittel mechanische Größen zeitlich erfaßt und zur Ermittlung der Standfestigkeit angrenzender Bauteile und/oder neuer Werkstoffe herangezogen werden.

Außerdem betrifft die Erfindung die Verwendung einer Vorrichtung zur Messung von mechanischen Größen nach Anspruch 1 bis 17, wobei mittels der Vorrichtung die mechanische Belastung von Bauteilen erfaßt wird. Dabei kann es vorgesehen sein, dass mittels der Vorrichtung Zugkräfte, Schubkräfte oder Dehnung in wenigstens einer Raumrichtung erfaßt werden.

Weitere Einzelheiten und Vorteile der Erfindung werden anhand eines in der Zeichnung dargestellten Ausführungsbeispiels näher erläutert. Es zeigen:
- Figur 1:: eine Draufsicht der Vorrichtung zur Messung von mechanischen Größen in einer ersten Ausführungsform und
- Figur 2:: eine perspektivische Ansicht der Vorrichtung zur Messung von mechani- schen Größen in einer zweiten Ausführungsform.

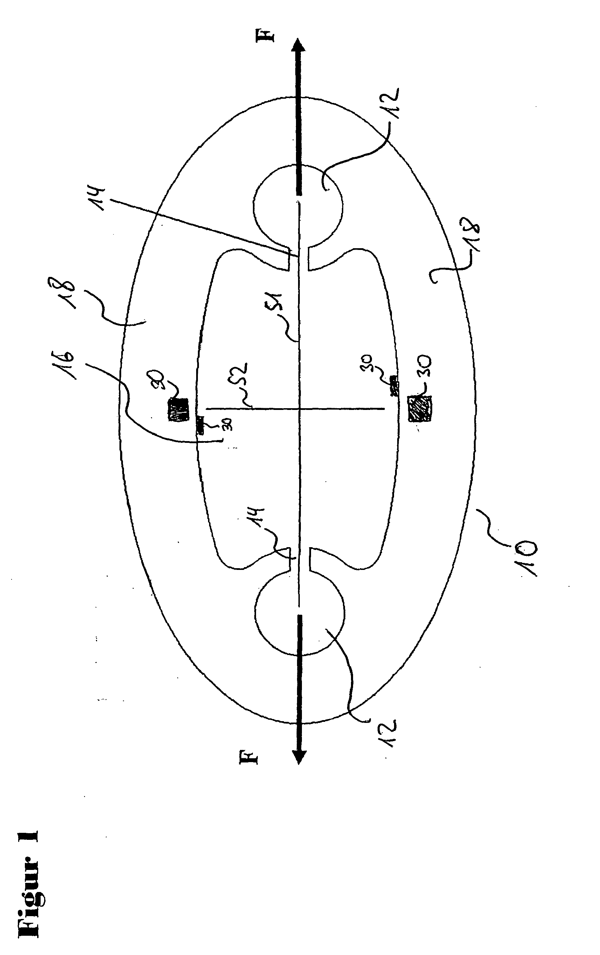

Figur 1 zeigt die erfindungsgemäße Vorrichtung zur Messung von mechanischen Größen in einer ersten Ausführungsform. Die Vorrichtung 10 weist dabei eine elliptische Grundform auf. Die Vorrichtung 10 weist zwei sich gegenüberliegende erste Ausnehmungen 12 auf, deren Mittelpunkte auf der Symmetrieachse S1 liegen, die zugleich die Krafteinleitungsachse der Kräfte F ist. Die ersten Ausnehmungen 12 sind für die Aufnahme von (nicht gezeigten) Bolzen zur Krafteinleitung vorgesehen, wobei die ersten Ausnehmungen 12 die Bolzen nicht vollständig umschließen. Die ersten Ausnehmungen 12 sind zur zweiten Ausnehmung 16 hin über den Spalt 14 verbunden. Die ersten Ausnehmungen 12 bilden über die Spalte 14 somit mit der zweiten Ausnehmung 16 eine gemeinsame Ausnehmung.

Die durch die ersten und zweiten Ausnehmungen 10, 12 gebildete gemeinsame Ausnehmung weist im wesentlichen abgerundete Konturen auf, die einzigen Ecken der gemeinsamen Ausnehmung sind an den Spalten 14. Die Grundform der Vorrichtung 10 weist in diesem Ausführungsbeispiel zwei aufeinander senkrecht stehende Symmetrieachsen S1 und S2 auf, wobei die erste Symmetrieachse S1 durch die Mittelpunkte der ersten Ausnehmungen 12 verläuft und die zweite Symmetrieachse S2 die sich gegenüberliegenden ersten Ausnehmungen 12 aufeinander abbildet. Die Symmetrieachse S2 ist zugleich die Messrichtung.

Die zweite Symmetrieachse S2 teilt die gemeinsame Ausnehmung in zwei Hälften, wobei eine Hälfte der Form eines Torsos mit Kopf angenähert ist.

An der Vorrichtung 10 sind insgesamt vier Dehnungsmessstreifen 30 angebracht, wobei je zwei Dehnungsmessstreifen auf der Oberseite der Vorrichtung an der Umfassung 18 der zweiten Ausnehmung 16 auf der zweiten Symmetrieachse angebracht sind und zwei weitere Dehnungsmessstreifen 30 an der Seitenfläche der Innenseite der zweiten Ausnehmung 16 angebracht sind. Da die Umfassung 18 der zweiten Ausnehmung der größten Biegeverformung unterliegt, wird hier die Biegung erfaßt und das Messsignal abgegriffen. Ferner ist vorgesehen, die Biegeverformungen optisch zu erfassen, ebenso werden mittels der Dehnungsmessstreifen und des (nicht gezeigten) optischen Messverfahrens Zugkraft, Dehnung, Spannungsverteilung, Schubkräfte, Torsion sowie Materialeigenschaften erfaßt.

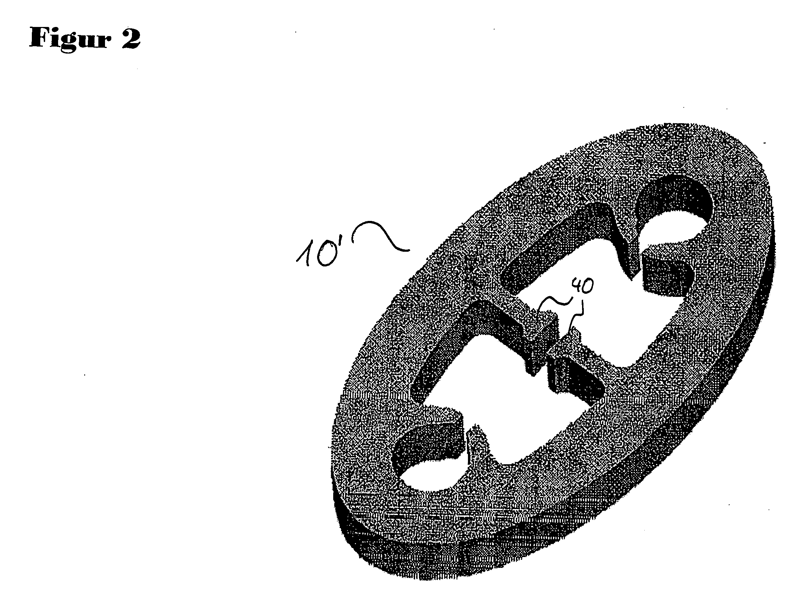

Figur 2 zeigt eine Vorrichtung 10' in einer weiteren Ausgestaltungsform. Diese Vorrichtung weist sämtliche Merkmale des ersten Ausführungsbeispiels auf, zusätzlich sind umgekehrt T-förmige Stege 40 vorgesehen. An den umgekehrt T-förmigen Stegen 40 werden nicht abgebildete Dehnungsmessstreifen 30 angebracht. Die Vorrichtung 10' besteht in diesem Ausführungsbeispiel aus rostfreiem Stahl.

## Patentansprüche

1. Vorrichtung zum Messen mechanischer Größen mit ersten Ausnehmungen zur Aufnahme von ersten Mitteln, wobei mittels der wenigstens zwei ersten Mittel Kraft in die Vorrichtung einleitbar ist, sowie wenigstens einem zweiten Mittel, über welches mechanische Größen erfassbar sind, und wenigstens einer zweiten Ausnehmung,
**dadurch gekennzeichnet,**
**dass** die ersten Ausnehmungen die ersten Mittel nicht vollständig umschließen und wenigstens zwei sich gegenüberliegende erste Ausnehmungen mit einer zweiten Ausnehmung in Verbindung stehen und insgesamt eine gemeinsame Ausnehmung bilden.

2. Vorrichtung zum Messen mechanischer Größen nach Anspruch 1, **dadurch gekennzeichnet, dass** die ersten Ausnehmungen im wesentlichen kreisförmig sind.

3. Vorrichtung zum Messen mechanischer Größen nach Anspruch 1 oder 2, **dadurch gekennzeichnet, dass** die durch die ersten und zweiten Ausnehmungen gebildete gemeinsame Ausnehmung im wesentlichen abgerundete Konturen aufweist.

4. Vorrichtung zum Messen mechanischer Größen nach einem der vorhergehenden Ansprüche, **dadurch gekennzeichnet, dass** die zweiten Mittel angrenzend an die zweite Ausnehmung angebracht und/oder auf diese ausgerichtet sind.

5. Vorrichtung zum Messen mechanischer Größen nach einem der vorhergehenden Ansprüche, **dadurch gekennzeichnet, dass** wenigstens zwei zweite Mittel vorgesehen sind, die an verschiedenen Ebenen oder verschiedenen Seitenflächen der Vorrichtung angebracht sind.

6. Vorrichtung zum Messen mechanischer Größen nach einem der vorhergehenden Ansprüche, **dadurch gekennzeichnet, dass** die ersten Mittel Bolzen sind.

7. Vorrichtung zum Messen mechanischer Größen nach einem der vorhergehenden Ansprüche, **dadurch gekennzeichnet, dass** die zweiten Mittel ein optisches, elektromagnetisches oder elektrostatisches Meßsystem umfassen.

8. Vorrichtung zum Messen mechanischer Größen nach einem der vorhergehenden Ansprüche, **dadurch gekennzeichnet, dass** die zweiten Mittel Dehnungsmessstreifen umfassen.

9. Vorrichtung zum Messen mechanischer Größen nach einem der vorhergehenden Ansprüche, **dadurch gekennzeichnet, dass** die Vorrichtung eine elliptische oder im wesentlichen kreisförmige Grundform aufweist.

10. Vorrichtung zum Messen mechanischer Größen nach einem der vorhergehenden Ansprüche, **dadurch gekennzeichnet, dass** die Grundform wenigstens zwei Symmetrieachsen aufweist, wobei die erste Symmetrieachse durch die Mittelpunkte der ersten Ausnehmungen verläuft und die zweite Symmetrieachse wenigstens zwei sich gegenüberliegende erste Ausnehmungen aufeinander abbildet.

11. Vorrichtung zum Messen mechanischer Größen nach einem der vorhergehenden Ansprüche, **dadurch gekennzeichnet, dass** eine Symmetriehälfte mit einer ersten Ausnehmung und dem Teil einer zweiten Ausnehmung der Form eines Torsos mit Kopf angenähert ist.

12. Vorrichtung zum Messen mechanischer Größen nach einem der vorhergehenden Ansprüche, **dadurch gekennzeichnet, dass** zwei sich gegenüberliegende erste Ausnehmungen und eine zweite Ausnehmung vorgesehen sind.

13. Vorrichtung zum Messen mechanischer Größen nach einem der vorhergehenden Ansprüche, **dadurch gekennzeichnet, dass** zwei sich gegenüberliegende Stege in der zweiten Ausnehmung vorgesehen sind.

14. Vorrichtung zum Messen mechanischer Größen nach Anspruch 13, **dadurch gekennzeichnet, dass** die Stege umgekehrt T-förmig ausgebildet sind.

15. Vorrichtung zum Messen mechanischer Größen nach Anspruch 13 oder 14, **dadurch gekennzeichnet, dass** die Stege auf einer Symmetrieachse der Vorrichtung liegen.

16. Vorrichtung zum Messen mechanischer Größen nach einem der vorhergehenden Ansprüche, **dadurch gekennzeichnet, dass** dritte Mittel zur zeitlichen Erfassung der mechanischen Größen vorgesehen sind.

17. Vorrichtung zum Messen mechanischer Größen nach einem der vorhergehenden Ansprüche, **dadurch gekennzeichnet, dass** mittels der Vorrichtung Zugkräfte, Schubkräfte oder Dehnung in wenigstens einer Raumrichtung erfassbar sind.

18. Verfahren zur Messung von mechanischen Größen, **dadurch gekennzeichnet, dass** mittels einer Vorrichtung nach Anspruch 1 bis 17 über die zweiten Mittel wenigstens eine mechanische Größe ermittelt wird.

19. Verfahren zur Messung von mechanischen Größen nach Anspruch 18, **dadurch gekennzeichnet, dass** mittels der Vorrichtung Zugkräfte, Schubkräfte oder Dehnung in wenigstens einer Raumrichtung erfaßt werden.

20. Verfahren zur Messung von mechanischen Größen nach Anspruch 18 oder 19, **dadurch gekennzeichnet, dass** mittels der dritten Mittel mechanische Größen zeitlich erfaßt und zur Ermittlung der Standfestigkeit angrenzender Bauteile und/oder neuer Werkstoffe herangezogen werden.

21. Verwendung einer Vorrichtung zur Messung von mechanischen Größen nach Anspruch 1 bis 17, **dadurch gekennzeichnet, dass** mittels der Vorrichtung die mechanische Belastung von Bauteilen erfaßt wird.

22. Verwendung einer Vorrichtung zur Messung von mechanischen Größen nach Anspruch 21, **dadurch gekennzeichnet, dass** mittels der Vorrichtung Zugkräfte, Schubkräfte oder Dehnung in wenigstens einer Raumrichtung erfaßt werden.

23. Verwendung einer Vorrichtung zur Messung von mechanischen Größen nach Anspruch 21 oder 22, **dadurch gekennzeichnet, dass** mittels der Vorrichtung die Standfestigkeit angrenzender Bauteile ermittelt wird.
